# EUROPÄISCHE PATENTSCHRIFT

(11) **EP 0 663 547 B1**
(45) Veröffentlichungstag und Bekanntmachung des Hinweises auf die Patenterteilung: **28.01.1998**
(21) Anmeldenummer: 94250294.9
(22) Anmeldetag: 09.12.1994
(51) Int. Cl.: F16H 57/02, B25B 27/02

(54) **Antrieb mit Motor und Steckritzel und Vorrichtung zur Montage bzw. Demontage des Steckritzels**
Powered drive and stub shaft pinion and device to install the stub shaft pinion
Entraînement motorisé et pignon à tourillon et dispositif pour le montage ou démontage le pignon

(30) Priorität: 17.01.1994 DE 4401491
(43) Veröffentlichungstag der Anmeldung: 19.07.1995
(73) Patentinhaber: MANNESMANN Aktiengesellschaft, 40213 Düsseldorf (DE)
(72) Erfinder: Schmidt, Heinz, D-44227 Dortmund (DE); Dumke, Kurt, D-45549 Sprockhövel (DE)
(74) Vertreter: Presting, Hans-Joachim, Dipl.-Ing.

(56) Entgegenhaltungen:
- EP-A- 0 444 491
- DE-A- 4 134 552
- US-A- 1 403 893
- US-A- 3 200 484
- US-A- 3 299 496
- US-A- 3 434 366
- MACHINE DESIGN, Bd. 64,Nr. 3, Februar 1992 CLEVELAND, Seiten 50-54, D.CANNON 'Mating Motors and Gearheads'

## Beschreibung

Die Erfindung betrifft eine Antriebsanordnung mit den Merkmalen gemäß Oberbegriff von Anspruch 1, wie sie aus der US-A 3 434 366 bekannt ist, sowie eine Vorrichtung zum Montieren bzw. Demontieren eines derartigen Steckritzels auf einer derartigen Antriebswelle.

Weiterhin ist es bekannt, bei einer Vorrichtung zum Montieren und Demontieren von Maschinenteilen auf und von Wellen, mittels eines Dreisterns, der sich gegen einen abzuziehenden Ring mittels Stützbeinen stützt, die Verbindung Welle und Ring zu trennen (DE-A 30 17 595). Alle derartigen bekannten Abziehvorrichtungen versagen jedoch bei der speziellen Antriebsform mit Motor, in dessen Antriebswelle ein Steckritzel mit einem konischen Schaft in einer gleichkonischen Aufnahmebohrung eingefügt ist. Diese Art von Antrieben bedarf daher einer besonderen Behandlungsweise.

Bei direkt angetriebenen, ohne Kupplung arbeitenden Zahnrad-Getrieben erfolgt die Drehmomentübertragung vom Motor zum Getriebe in folgenden Arten:
a) durch eine auf die Motorwelle aufgeschnittene Verzahnung,
b) durch ein auf die Motorwelle aufgesetztes Ritzel oder
c) durch ein in die Motorwelle eingestecktes Ritzel (sogenanntes Steckritzel).

Während die unter a) genannte Ausführung nur für konstante Übersetzungen der Eingangsstufe sinnvoll ist und auch hier nur aus geometrischen Gründen für einen eingeengten Übersetzungsbereich möglich ist, bieten die unter b) und c) genannten Alternativen die Möglichkeit einer größeren Übersetzungsvarianz sowie die Möglichkeit, durch Austausch der Verzahnungsteile auch eine nachträgliche Änderung der Übersetzung in der ersten Stufe durchzuführen.

Die Kraftübertragung in den unter b) und c) genannten Ausführungen kann in den Fällen:
a) durch Stoffschluß (Kleben, Löten etc.),
b) durch Reibschluß (Längspreß-, Schrumpfpreß-, Dehnpreßverbindung etc.) oder
c) durch die Kombination der unter b) und c)
genannten Verbindungsarten erfolgen. Selbstverständlich sind auch Formschluß-Lösungen wie z.B. eingesetzte Paßfedern, möglich.

Da bei den aufgesetzfen Ritzeln in der Eingangsstufe infolge der vorgegebenen Motorwellendurchmesser der Übersetzungsbereich stark eingeschränkt ist - es können nur selten hohe Übersetzungen realisiert werden - ist es bei der Steckritzelausführung möglich, einen wesentlichen größeren Übersetzungsbereich abzudecken. Nachteilig wirkt sich bei derartigen Steckritzeln aber die mehr oder weniger aufwendige Montage und Demontage bei der Steckritzelverbindung aus. Während sich die aufgesetzten Ritzel meist durch Erwärmen leicht montieren lassen und mit Hilfe einer einfachen Abziehvorrichtung auch wieder leicht demontieren lassen, erfordert die Steckritzelverbindung aufwendigere Arbeitsschritte und Werkzeuge, sowohl für das Fügen als auch für das Lösen.

Der im Anspruch 1 angegebenen Erfindung liegt daher das Problem zugrunde, unter Schaffung eines besonderen Steckritzels das Fügen und Lösen derartiger Steckritzel zu erleichtern bzw. zu vereinfachen.

Die gestellte Aufgabe wird erfindungsgemäß dadurch gelöst, daß das Steckritzel stirnseitig im Bereich seiner Verzahnung mit einem Bundzapfen ausgeführt ist und daß die Antriebswelle im Bereich der Aufnahmebohrung eine äußere Eindrehung aufweist. Dadurch wird der bisherige Montage- bzw. Demontage-Nachteil aufgehoben und es ergeben sich darüber hinaus zusätzliche Vorteile. Mit Hilfe einer einfachen Montage- und Demontagevorrichtung (mechanisch oder hydraulisch betätigt) können nunmehr für die Erstmontage oder den Austausch die Steckritzel problemlos gefügt und gelöst werden. Hierbei kann sowohl für das Fügen als auch für das Lösen das gleiche Werkzeug benutzt werden.

Dieses Fügen und Lösen geschieht nunmehr aufgrund weiterer Erfindungsmerkmale dadurch, daß das Steckritzel mittels einer hinter dem Bundzapfen eingreifenden ersten Greifvorrichtung und die Antriebswelle mittels einer in die äußere Eindrehung eingreifenden zweiten Greifvorrichtung erfaßbar ist und daß die erste und die zweite Greifvorrichtung relativ gegeneinander kraftgetrieben anstellbar sind. Damit ist es möglich, größere Axialkräfte bei der Montage und Demontage aufzubringen, wodurch das Drehmoment voll durch Reibschluß übertragen werden kann; etwaige weitere Hilfsmittel, wie z.B. eine Paßfeder sind daher nicht mehr erforderlich. Das Steckritzel muß auch nicht vollständig durchbohrt werden und die Motorwelle muß zusätzlich keine Gewindebohrung aufweisen. Außerdem werden geringere Herstellkosten erforderlich. Vorteilhaft ist hier, daß der Bundzapfen am Steckritzel gleichzeitig als Spannmöglichkeit und Mitnahme bei der Steckritzelfertigung dienen kann. Mit diesem gleichen Werkzeug können die Steckritzel sowohl montiert (eingepreßt) als auch demontiert (ausgezogen) werden.

Nach einer weiteren Ausgestaltung der Erfindung ist vorgesehen, daß die erste Greifvorrichtung eine geteilte Einsatzbuchse und die zweite Greifvorrichtung einen geteilten Einsatzring aufweist, daß die Einsatzbuchse von einem zweiten Rohrstück umfaßbar ist, daß die geteilte Bundbuchse von einem ersten Rohrstück umfaßbar ist, wobei die geteilte Bundbuchse das zweite geteilte Rohrstück frei umgibt, daß in der geteilten Bundbuchse eine erste Gewindemutter axial festgelegt auf einer Gewindespindel angeordnet ist, daß in der geteilten Einsatzbuchse eine zweite Gewindemutter axial festgelegt und auf derselben Gewindespindel angeordnet ist und daß für die erste Gewindemutter ein Gewindeabschnitt mit einer Gewindesteigung (A) und für die zweite Gewindemutter ein Gewindeabschnitt mit einer Gewindesteigung (B) vorgesehen ist. Durch leicht wechselbare Einsätze ist nur ein Grundwerkzeug für unterschiedliche Steckritzelgrößen und Motorwellendurchmesser erforderlich. Es ist außerdem möglich, die kraft- und wegabhängige Montage bzw. Demontage auch auf der Baustelle auszuführen.

Daher ist noch vorgesehen, daß der Einsatzring und die Einsatzbuchse jeweils mit unterschiedlichen Innenabmessungen ausgeführt und jeweils für sich austauschbar sind.

Ein Ausführungsbeispiel der Erfindung ist in der Zeichnung dargestellt und wird im folgenden näher beschrieben.

Es zeigen:
- Figur 1: Einen axialen Längsschnitt durch einen Antrieb mit Motor und Aufsteckgetriebe,
- Figur 2: den axialen Längsschnitt gemäß Figur 1 bei entferntem Aufsteckgetriebe und
- Figur 3: einen axialen Längsschnitt durch die Abziehvorrichtung.

Ein Getriebe 21 mit einem Flansch 22 trägt einen Motor 1. Der Motor 1 weist ein Frontlager 2 mit einer Dichtung 3 und eine Dichtung 4 gegenüber dem Flansch 22 des Aufsteckgetriebes 21 auf.

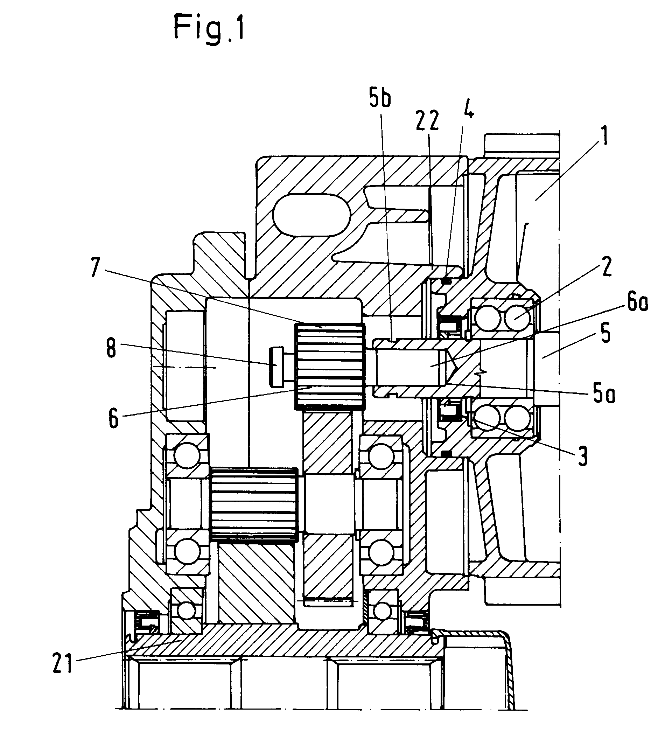

In dem Frontlager 2 ist eine Antriebswelle 5 drehgelagert. Diese Antriebswelle 5 nimmt in einer konischen Aufnahmebohrung 5a ein Steckritzel 6 mit einem gleichkonischen Schaft 6a auf. An der Antriebswelle 5 ist etwa auf Höhe des vorderen Bereichs der Aufnahmebohrung 5a eine äußere Eindrehung 5b eingearbeitet. Das Steckritzel 6 ist stirnseitig im Bereich seiner Verzahnung 7 mit einem Bundzapfen 8 ausgeführt. Beides, der Bundzapfen 8 und die äußere Eindrehung 5b stehen in einer wichtigen Beziehung für das Einfügen oder Ausbauen des Steckritzels 6 aus der Antriebswelle 5 (Figur 1).

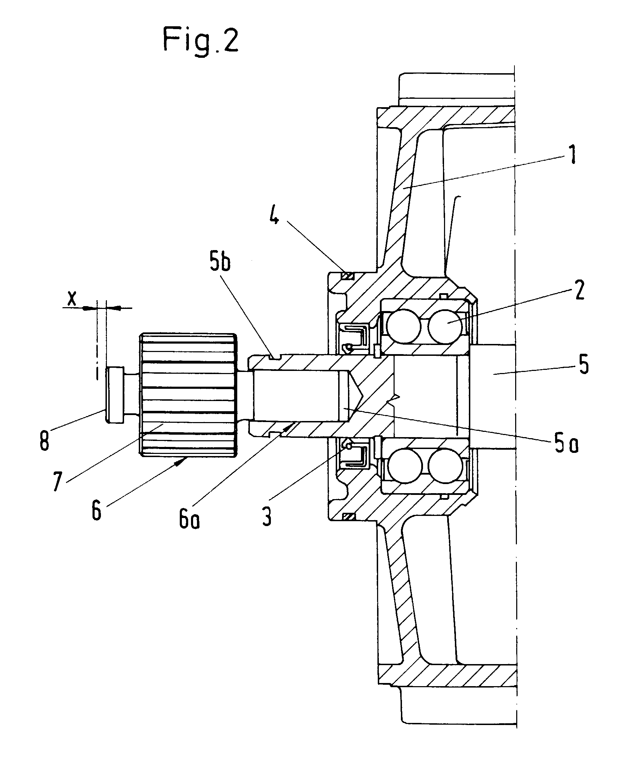

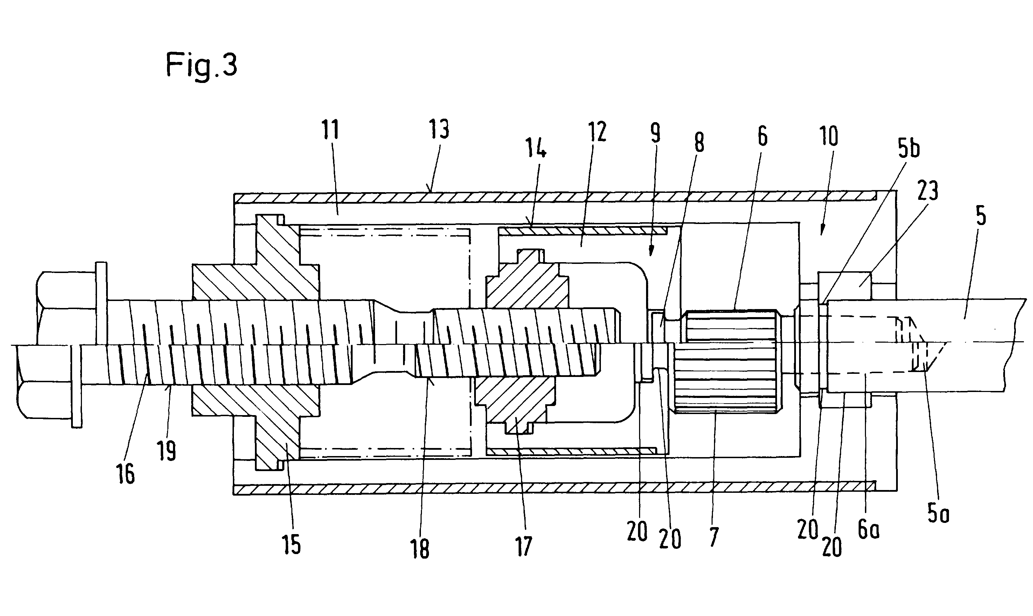

Für das Montieren oder Demontieren des Steckritzels 6 (Figur 3) ist das Steckritzel 6 mittels einer hinter dem Bundzapfen 8 eingreifenden ersten Greifvorrichtung 9 und die Antriebswelle 5 mittels einer in die äußere Eindrehung 5b eingreifenden zweiten Greifvorrichtung 10 erfaßbar. Sobald die erste und die zweite Greifvorrichtung 9 und 10 relativ gegeneinander kraftgetrieben angestellt werden, wird das Steckritzel 6 bei Bewegung um den Betrag X (vgl. Figur 2) entweder hineingedrückt oder herausgezogen.

Die erste Greifvorrichtung 9 weist eine geteilte Einsatzbuchse 12 auf und die zweite Greifvorrichtung 10 besitzt eine geteilte Bundbuchse 11 und einen geteilten Einsatzring 23. Die Bundbuchse 11 wird von einem ersten Rohrstück 13 umfaßt. Die geteilte Einsatzbuchse 12 wird demgegenüber von einem zweiten Rohrstück 14 umfaßt, wobei die geteilte Bundbuchse 11 das zweite Rohrstück 14 frei umgibt. Das zweite Rohrstück 14 umschließt eine zweite Gewindemutter 17 und legt diese axial fest. Die Gewindemutter 17 ist auf einer Gewindespindel 16 aufgeschraubt. In der geteilten Bundbuchse 11 ist eine erste Gewindemutter 15 axial festgelegt und auf derselben Gewindespindel 16 aufgeschraubt.

Für die erste Gewindemutter 15 ist ein Gewindeabschnitt 19 mit einer Gewindesteigung (A) und für die zweite Gewindemutter 17 ein Gewindeabschnitt 18 mit einer unterschiedlichen Gewindesteigung (B) vorgesehen. Die Drehung der Gewindespindel 16 verschiebt daher die erste und zweite Gewindemutter 15 und 17 relativ zueinander.

Für unterschiedliche Abmessungen von Steckritzeln 6 und Antriebswellen 5 ist noch vorgesehen, daß der Einsatzring 23 und die Einsatzbuchse 12 jeweils mit unterschiedlichen Innenabmessungen 20 ausgeführt und jeweils für sich austauschbar sind.

## Patentansprüche

1. Antriebsanordnung mit einem Motor und mit einer Antriebswelle (5), die ein eine Verzahnung (7) aufweisendes Steckritzel (6) trägt, wobei das Steckritzel (6) mit einem konischen Schaft (6a) und die Antriebswelle mit einer entsprechend konischen Aufnahmebohrung (5a) versehen sind, in welche der konische Schaft (5a) einfügbar oder aus dieser ausbaubar ist,
dadurch gekennzeichnet,
daß das Steckritzel (6) stirnseitig im Bereich seiner Verzahnung (7) mit einem Bundzapfen (8) ausgeführt ist und daß die Antriebswelle (5) im Bereich der Aufnahmebohrung (5a) eine äußere Eindrehung (5b) aufweist.

2. Vorrichtung zum Montieren bzw. Demontieren eines Steckritzels (6) auf einer Antriebswelle, wobei das Steckritzel eine Verzahnung (7) und einen konischen Schaft (6a) aufweist, welcher in eine entsprechend konische Aufnahmebohrung (5a) der Antriebswelle (5) einfügbar oder aus dieser ausbaubar ist,
dadurch gekennzeichnet,
- daß eine erste und zweite Greifvorrichtung (9 und 10) vorgesehen sind,
- daß die erste Greifvorrichtung (9) hinter einem Bundzapfen (8), der stirnseitig im Bereich der Verzahnung (7) des Steckritzels (6) ausgeführt ist, eingreift,
- daß die zweite Greifvorrichtung (10) in eine äußere Eindrehung (5b), die im Bereich der Aufnahmebohrung (5a) der Antriebswelle (5) vorgesehen ist, eingreift, und
- daß die erste und die zweite Greifvorrichtung (9, 10) relativ gegeneinander kraftgetrieben anstellbar sind.

3. Vorrichtung nach Anspruch 2,
dadurch gekennzeichnet,
daß die erste Greifvorrichtung (9) eine geteilte Einsatzbuchse (12) und die zweite Greifvorrichtung (10) einen geteilten Einsatzring (23) und eine geteilte Bundbuchse (11) aufweist, daß die Einsatzbuchse (12) von einem zweiten Rohrstück (14) umfaßbar ist, daß die geteilte Bundbuchse (11) von einem ersten Rohrstück (13) umfaßbar ist, wobei die geteilte Bundbuchse (11) das zweite geteilte Rohrstück (14) frei umgibt, daß in der geteilten Bundbuchse (11) eine erste Gewindemutter (15) axial festgelegt auf einer Gewindespindel (16) angeordnet ist, daß in der geteilten Einsatzbuchse (12) eine zweite Gewindemutter (17) axial festgelegt und auf derselben Gewindespindel (16) angeordnet ist und daß für die erste Gewindemutter (15) ein Gewindeabschnitt (19) mit einer Gewindesteigung (A) und für die zweite Gewindemutter (17) ein Gewindeabschnitt (18) mit einer Gewindesteigung (B) vorgesehen ist.

4. Vorrichtung nach einem der Ansprüche 2 oder 3,
dadurch gekennzeichnet,
daß der Einsatzring (23) und die Einsatzbuchse (12) jeweils mit unterschiedlichen Innenabmessungen (20) ausgeführt und jeweils für sich austauschbar sind.

## Claims

1. A drive arrangement with a motor and a drive shaft (5) which bears a plug pinion (6) bearing teeth (7), the plug pinion (6) being provided with a conical shank (6a) and the drive shaft with a correspondingly conical receiving bore (5a), into which the conical shank (5a) can be inserted or from which it can be removed,
characterised in that the plug pinion (6) is provided on its end face in the region of its teeth (7) with a collar journal (8), and that the drive shaft (5) has an external turned groove (5b) in the region of the receiving bore (5a).

2. An apparatus for mounting a plug pinion (6) on a drive shaft and dismounting it therefrom, the plug pinion having teeth (7) and a conical shank (6a) which can be inserted into or removed from a correspondingly conical receiving bore (5a) of the drive shaft (5),
characterised in that
- a first and second gripping means (9 and 10) are provided,
- that the first gripping means (9) engages behind a collar journal (8) which is formed on the end face in the region of the teeth (7) of the plug pinion (6),
- that the second gripping means (10) engages in an external turned groove (5b) which is provided in the region of the receiving bore (5a) of the drive shaft (5), and
- that the first and second gripping means (9, 10) are adjustable relative to one another in force-driven manner.

3. An apparatus according to Claim 2, characterised in that the first gripping means (9) has a divided insert bush (12) and the second gripping means (10) has a divided insert ring (23) and a divided collar bush (11), that the insert bush (12) can be surrounded by a second pipe piece (14), that the divided collar bush (11) can be surrounded by a first pipe piece (13), the divided collar bush (11) freely surrounding the second divided pipe piece (14), that a first threaded nut (15) is arranged, axially fixed, on a threaded spindle (16) in the divided collar bush (11), that a second threaded nut (17) is axially fixed in the divided insert bush (12) and is arranged on the same threaded spindle (16), and that a threaded section (19) having a thread pitch (A) is provided for the first threaded nut (15) and a threaded section (18) having a thread pitch (B) is provided for the second threaded nut (17).

4. An apparatus according to one of Claims 2 or 3,
characterised in that the insert ring (23) and the insert bush (12) are each designed with different internal dimensions (20) and can each be individually replaced.

## Revendications

1. Dispositif d'entraînement comportant un moteur et un arbre d'entraînement (5) qui porte un pignon de connexion (6) muni d'une denture (7), le pignon de connexion (6) étant pourvu d'une tige conique (6a) et l'arbre d'entraînement étant pourvu d'un perçage de réception (5a) conique en correspondance, dans lequel la tige conique peut être introduite ou sortie,
caractérisé en ce que le pignon de connexion (6) est muni frontalement, dans la zone de sa denture (7), d'un tourillon à collet (8), et en ce que l'arbre d'entraînement (5) comporte dans la zone du perçage de réception (5a) une gorge externe (5b) tournée dans la masse.

2. Dispositif pour monter ou démonter un pignon de connexion (6) sur un arbre d'entraînement, le pignon de connexion présentant une denture (7) et une tige conique (6a) qui peut être entrée ou sortie d'un perçage de réception (5a) conique en correspondance de l'arbre d'entraînement (5),
caractérisé :
- en ce que l'on prévoit des premier et second dispositifs de prise (9 et 10),
- en ce que le premier dispositif de prise (9) s'engage derrière le tourillon à collet (8) qui est formé frontalement dans la zone de la denture (7) du pignon de connexion (6),
- en ce que le deuxième dispositif de prise (10) s'engage dans une gorge externe (5b) tournée dans la masse et prévue dans la zone de la gorge de réception (5a) de l'arbre d'entraînement (5), et
- en ce que les premier et second dispositifs de prise (9,10) peuvent être réglés l'un par rapport à l'autre, en force.

3. Dispositif selon la revendication 2,
caractérisé en ce que le premier dispositif de prise (9) comporte une douille de montage séparée (12) et le second dispositif de prise (10) comporte une bague de montage séparée (23) et une douille de liaison séparée (11), en ce que la douille de montage (12) peut être entourée par une deuxième pièce en tube (14), en ce que la douille de liaison séparée (11) peut être entourée par une première pièce en tube (13), la douille de liaison séparée (11) entourant librement la seconde pièce en tube séparée (14), en ce que sur la douille de liaison séparée (11) est agencé un premier écrou fileté (15) fixé axialement sur une broche filetée (16), en ce que sur la douille de montage séparée (12) est fixé axialement un second écrou fileté (17) qui est agencé sur la même broche filetée (16), et en ce que l'on prévoit pour le premier écrou fileté (15) un tronçon fileté (19) avec un pas de filetage (A) et pour le second écrou fileté (17) un tronçon fileté (18) avec un pas de filetage (B).

4. Dispositif selon l'une des revendications 2 ou 3,
caractérisé en ce que la bague de montage (23) et la douille de montage (12) sont réalisées respectivement avec des dimensions internes (20) différentes et sont échangeables.
